Europäisches Patentamt

European Patent Office

Office européen des brevets

(11) Publication number: **0 062 398**
**B1**

(12) **EUROPEAN PATENT SPECIFICATION**

(45) Date of publication of patent specification: **04.12.85**

(21) Application number: **82300701.8**

(22) Date of filing: **12.02.82**

(51) Int. Cl.⁴: **B 22 D 41/08, C 22 C 1/00**

(54) **Method of removing liquid from mixing chambers.**

(30) Priority: **23.03.81 US 246493**

(43) Date of publication of application:
**13.10.82 Bulletin 82/41**

(45) Publication of the grant of the patent:
**04.12.85 Bulletin 85/49**

(84) Designated Contracting States:
**BE CH DE FR GB IT LI NL SE**

(56) References cited:
**AT-B- 281 323
DE-A-1 508 782
DE-C- 369 310
GB-A- 833 956
GB-A- 913 180
US-A-3 902 544
US-A-3 936 298
US-A-3 954 455
US-A-4 194 552**

(73) Proprietor: **Rheocast Corporation
11740 North Port Washington Road P.O. Box 40
Mequon Wisconsin (WI) 53092 (US)**

(72) Inventor: **Bye, Richard L., Jr.
4137 N. Woodburn Street
Shorewood WI 53211 (US)**

(74) Representative: **Lewin, John Harvey et al
Elkington and Fife High Holborn House 52/54
High Holborn
London WC1V 6SH (GB)**

Courier Press, Leamington Spa, England.

# Description

This invention relates to an improved method of discharging liquids from a mixing chamber and is particularly suited to the discharge of molten metals such as those metals and alloys which contain discrete degenerate dendritic primary solid particles and are to be subjected to casting techniques.

US—A—3,954,455 and 3,936,298 describe metal and metal alloy compositions which contain discrete degenerate dendritic primary solid particles and disclose the advantages of using such materials in casting; e.g., lower temperatures, longer mould life, etc. US—A—4,194,552, which discloses the features of the precharacterising parts of claims 1 and 4, is of interest with respect to a mixing apparatus for such metal compositions. In carrying out such casting methods it is necessary that the metal be thoroughly mixed while it is held in the mixing chambers so that, when cast, the metal is uniform in composition throughout. Also, it is important that the metal remain uniformly semi-solid throughout the mixing chamber and not solidify. The various types of valving systems used heretofore have not been totally satisfactory in that, when the molten metal is discharged and the discharge port plugged from the downstream side, metal tends to splatter during the plugging step. When a seal attached to the rotating mixer is used to stop the flow from the upstream side of the discharge port the discharge port and/or seal tends to wear unevenly and leakage occurs.

The present invention provides a process for mixing and discharging a liquid from a mixing chamber wherein the liquid is agitated by a vertically disposed agitating member, there being provided, in combination, a discharge port centrally disposed at the bottom of said mixing chamber, and seating means at the bottom of said agitating member adapted to fit into the upper portion of said port, the discharge and termination of discharge of liquid being accomplished by raising said agitating member, whereby liquid flows through said port, and, when termination of liquid flow is desired, lowering said rotating agitating member to seat said seating means in the upper portion of said port while maintaining rotation thereof, characterised in that there is provided a stopper plug which seats into the bottom portion of the discharge port, whereby discharge of liquid is effected by removing the stopper plug from the discharge port when the agitating member is in the raised position, the stopper plug being removed in a vertical and then in a horizontal path, and, in termination of discharge, after lowering the rotating agitating member the bottom portion of the discharge port is closed by replacing the stopper plug, after which the agitating member is raised.

The invention also provides a mixing chamber for mixing and discharging molten metal wherein said metal is agitated by a vertically disposed mixing member, comprising in combination, a discharge port centrally disposed at the bottom of said mixing chamber, and seating means at the bottom of said mixing chamber adapted to fit into the upper portion of said port, whereby the discharge and termination of discharge of molten metal can be accomplished by raising said mixing member, whereby metal flows through said port, and, when termination of metal flow is desired, lowering said rotating mixing member to seat said seating means in the upper portion of said port while maintaining rotation thereof, characterised by a stopper plug adapted to seat into the bottom portion of the discharge port, and means for removing the stopper plug from the discharge port in a vertical path and then in a horizontal path, whereby discharge of molten metal is effected by removing the stopper plug from the discharge port when the mixing member is in the raised position, and, in termination of discharge, after lowering the rotating mixing member, the bottom of said port is closed by replacing said stopper plug, after which the mixing member can be raised.

The present invention provides a novel mixing chamber and method of use wherein a liquid such as molten metal is uniformly mixed without solidification occurring. The molten metal from the mixing chamber flows smoothly and, when desired, flow may be smoothly stopped without splattering. In addition, the closure means of the flow port does not wear in a manner to adversely effect the system.

Reference is now made to the accompanying drawings, in which:

Fig. 1 is a side elevational view of the stirring device shown in operation in a metal melting furnace with the discharge port in a close position;

Fig. 2 is a plan view of the system shown in Fig. 1; and

Fig. 3 is a fragmentary side elevational view of the system with the associated mechanism for discharging the mixed metal.

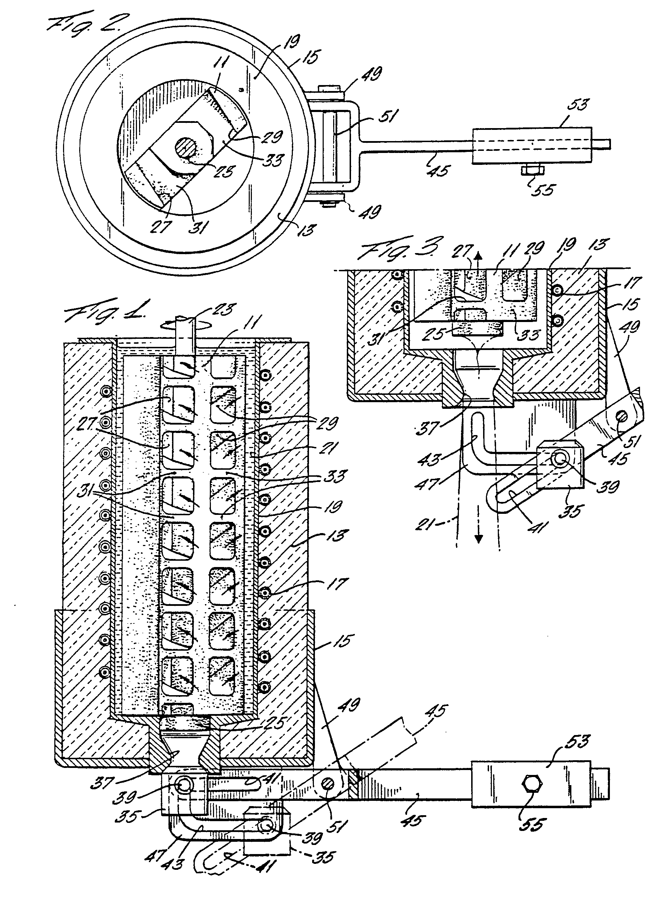

Referring now to Fig. 1 where the agitator system is shown in operation in a mixing chamber, the stirring device, shown generally as 11 is within a ceramic insulated chamber 13 seated in a lower housing retaining member 15 and heated electrically by heating coils 17. Within the thin-walled inner container 19 the fluid metal 21 is agitated by the stirrer 11 which is turned by a motor (not shown) attached to a driving shaft 23 at the upper end of the stirrer. The stirrer 11 comprises generally a rectangular solid which is preferably machined from graphite, although other heat-resistant materials may be used, such as suitably coated cast iron or ceramic material. The bottom of the stirrer is terminated by a seating means 25 adapted to seat into the upper portion of a discharge port 37, which seating means 25 is a short cylindrical axially centred bearing member. The stirrer assembly 11, 23, 25 is adapted to be raised or lowered to alternately lift the seating means 25 from or lower it into the upper portion of the discharge port 37, for the purpose described below.

The agitator shown in the drawing is a preferred type and comprises a rectangular solid constructed about an octagonal core member, but other configurations are useful. In the agitator shown, a series of ports or chambers 27 and 29 are on both sides of the axial centre and the upper and lower limits of the ports are defined by oppositely opposed, angularly directed fin sections 31 and 33 wherein the fins on one side (e.g., fins 31) are directed in one direction (upwardly) and the oppositely opposed fins (e.g., fins 33) are directed in the opposite direction (downwardly). The stirrer is shown in Fig. 1 in a position rotated 45° to the plane and when rotation is as shown by the arrow surrounding shaft 23, the flow of molten metal will follow the arrows shown in the ports, thus illustrating a lifting effect for the stirrer so that molten metal is mixed vertically as well as horizontally.

The number of ports on each side of the axial centre of the rectangular solid is not critical, but it has been found that for use in a melting furnace of about 4 inches (10 cm) diameter and about 11.5 inches (29 cm) high and having a number of ports on each side, 6 to 8 ports are useful, 8 ports being shown in Fig. 1.

At the bottom of the furnace 13 in Fig. 1 a plug 35 is shown seated in the bottom portion of the discharge port 37. The plug has a centrally position trunnion 39 mounted in an elongated slot 41 of a lever arm 45 and in a cam track 43 in a depending flange 47 which is mounted at the bottom of the furnace. A pivot retaining bracket 49 supports a pivot 51 about which the lever arm 45 rotates. A slidable counterweight 53 on the lever arm is adjustable by means of a bolt 55. As can be seen by Fig. 2, the lever arm terminates in a bifurcated end 57 to form a yoke mounted on the pivot 51 as shown. Fig. 3 shows the plug 35 in an open position to allow flow of metal from the furnace. This arrangement permits the plug to move vertically rather than in an arc when it is in proximity to the discharge port 37 and horizontally only when substantially removed from the discharge port. In this way proper seating of the plug in the discharge port is assured and even if wear on the plug occurs, which wear will be limited because of this arrangement, proper seating is maintained.

Under normal conditions, the position of the stirrer 11 is such that the seating means 25 is not seated in the discharge port 37. At these times the mixing chamber seal is provided by the plug 35 seated in the bottom of the discharge port 37.

When metal is to be discharged, the plug 35 is removed and metal is allowed to flow out of the discharge port 37. When the desired amount of metal has been discharged, the stirrer assembly 11, 23, 25 is lowered until the seating means 25 is seated in the upper portion of the discharge port 37, thereby terminating metal flow. The plug 35 is then seated in the bottom of the discharge port 37. The sequence is completed by raising the stirrer 11 into its normal position.

Several advantages and benefits accrue from the above described system. First of all, the flow of molten metal may be quickly stopped in a controlled manner without splattering. This is due to the time delay effected between the time of seating the stirrer and seating the plug, during which time the metal in the bottom discharge port runs out, thus avoiding fouling and splattering as the plug is positioned in the discharge port. Also, as indicated, there is little wear of the seating means used to seal the discharge port. Furthermore, should wear occur, the stopper plug is easily replaced and the agitator may be constructed with a replaceable seating means which would simply be affixed to and removed from the bottom of the agitator by an appropriate threaded bolt on the sealing means which fits into a threaded hold in the agitator. The system also provides easy access to the discharge port if cleaning is ever necessary. The two separate sealing means also provide an added measure of safety.

**Claims**

1. A process for mixing and discharging a liquid (21) from a mixing chamber (19) wherein the liquid is agitated by a vertically disposed agitating member (11), there being provided, in combination, a discharge port (37) centrally disposed at the bottom of said mixing chamber, and seating means (25) at the bottom of said agitating member adapted to fit into the upper portion of said port, the discharge and termination of discharge of liquid being accomplished by raising said agitating member, whereby liquid flows through said port, and, when termination of liquid flow is desired, lowering said rotating agitating member to seat said seating means in the upper portion of said port while maintaining rotation thereof, characterised in that there is provided a stopper plug (35) which seats into the bottom portion of the discharge port (37), whereby discharge of liquid is effected by removing the stopper plug from the discharge port when the agitating member is in the raised position, the stopper plug being removed in a vertical and then in a horizontal path, and, in termination of discharge, after lowering the rotating agitating member the bottom portion of the discharge port is closed by replacing the stopper plug, after which the agitating member is raised.

2. A process as claimed in claim 1, wherein the liquid is a molten metal.

3. A process as claimed in claim 2, wherein said metal contains discrete degenerate dendritic primary solid particles.

4. A mixing chamber for mixing and discharging molten metal wherein said metal (21) is agitated by a vertically disposed mixing member (11), comprising, in combination, a discharge port (37) centrally disposed at the bottom of said mixing chamber (19), and seating means (25) at the bottom of said mixing member adapted to fit into the upper portion of said port, whereby the discharge and termination of discharge of molten metal can be accomplished by raising said mixing member, whereby metal flows through said port, and, when termination of metal flow is desired, lowering said rotating mixing member to seat said seating means in the upper portion of said port while maintaining rotation thereof, characterised by a stopper plug (35) adapted to seat into the bottom portion of the discharge port (37), and means (39, 41, 43, 45) for removing the stopper plug from the discharge port in a vertical path and then in a horizontal path, whereby discharge of molten metal is effected by removing the stopper plug from the discharge port when the mixing member is in the raised position, and, in termination of discharge, after lowering the rotating mixing member, the bottom of said port is closed by replacing said stopper plug, after which the mixing member can be raised.

5. A mixing chamber as claimed in claim 4, wherein the seating means at the bottom of said mixing member is replaceable.

**Patentansprüche**

1. Verfahren zum Mischen und Austragen einer Flüssigkeit (21) aus einer Mischkammer (19), bei welchem die Flüssigkeit mit einem vertikal angeordneten Rührer (11) gerührt wird, wobei in Kombination eine mittig am Boden der Mischkammer angeordnete Austragöffnung (37) und eine am unteren Ende des Rührers vorgesehene, in den oberen Teil der Öffnung passende Sitzvorrichtung (25) vorgesehen sind und das Austragen und die Beendigung des Austragens durch Anheben des Rührers erfolgen, wodurch Flüssigkeit durch die Öffnung fließt und der rotierende Rührer zur Beendigung des Flüssigkeitsflusses bei Aufrechterhaltung seiner Rotation mit der Sitzvorrichtung in den oberen Teil der Öffnung eingesetzt wird, dadurch gekennzeichnet, daß ein Sperrstopfen (35) vorgesehen ist, der in den Bodenteil der Austragöffnung (37) hineinpaßt, wodurch das Austragen von Flüssigkeit dadurch erfolgt, daß der Sperrstopfen von der Austragöffnung entfernt wird, wenn der Rührer im angehobenen Zustand ist, daß der Sperrstopfen entlang eines vertikalen und anschließend horizontalen Weges entfernt wird und daß der untere Bereich der Austragöffnung bei Beendigung des Austrags nach dem Absenken des Rührers durch Ersetzung des Sperrstopfens verschlossen wird, wonach der Rührer angehoben wird.

2. Verfahren nach Anspruch 1, bei welchem die Flüssigkeit ein geschmolzenes Metall ist.

3. Verfahren nach Anspruch 2, bei welchem das Metall diskrete entartete dendritische primäre Feststoffteile enthält.

4. Mischkammer zum Mischen und Austragen geschmolzenen Metalls, wobei das Metall (21) von einem vertikal angeordneten Mischorgan (11) gerührt wird, enthaltend in Kombination eine mittig am Boden der Mischkammer (19) angeordnete Austragöffnung (37) und eine am unteren Ende des Mischorgans vorgesehene Sitzvorrichtung (25), die in den oberen Teil der Öffnung hineinpaßt, wodurch das Austragen und die Beendigung des Austragens von geschmolzenem Material durch Anheben des Mischorgangs ausgeführt werden kann, wodurch Metall durch die Öffnung fließt und zur Beendigung des Metallflusses das rotierende Mischorgan unter Beibehaltung seiner Rotation abgesenkt wird, um die Sitzvorrichtung in den oberen Teil der Öffnung einzusetzen, gekennzeichnet durch einen Sperrstopfen (35), der in den unteren Teil der Austragöffnung (37) einsetzbar ist, und eine Einrichtung (39, 41, 43, 45) zum Entfernen des Sperrstopfens von der Austragöffnung entlang eines vertikalen Weges und anschließend eines horizontalen Weges, wodurch das Austragen geschmolzenen Materials erfolgt, indem der Sperrstopfen von der Austragöffnung entfernt wird, während sich das Mischorgan im angehobenen Zustand befindet, und bei Beendigung des Austragens der untere Teil der Öffnung nach dem Absenken des rotierenden Mischorgans durch Ersetzen des Sperrstopfens verschlossen wird, wonach das Mischorgan angehoben werden kann.

5. Mischkammer nach Anspruch 4, bei welcher die Sitzvorrichtung am unteren Ende des Mischorgans auswechselbar ist.

**Revendications**

1. Un procédé pour mélanger et décharger un liquide (21) d'une chambre mélangeuse (19), où le liquide est agité par un élément agitateur (11) disposé verticalement et où il est prévu, en combinaison, un orifice de décharge (37) disposé au centre du fond de ladite chambre mélangeuse, et une partie d'appui (25) placée à la base dudit élément agitateur et adaptée pour s'emboîter dans la partie supérieure dudit orifice, la décharge et la terminaison de décharge étant assurées par montée dudit élément agitateur, afin que du liquide s'écoule par ledit orifice et, lorsqu'il est souhaité d'arrêter l'écoulement de liquide, par descente dudit élément agitateur tournant pour engager ladite partie d'appui dans la partie supérieure dudit orifice tout en maintenant sa rotation, caractérisé en ce qu'il est prévu un tampon d'arrêt (35) qui vient s'engager dans la partie de base de l'orifice de décharge, de sorte qu'une décharge de liquide est effectuée en enlevant le tampon d'arrêt de l'orifice de décharge quand l'élément agitateur se trouve dans la position haute, le tampon d'arrêt étant enlevé sur un trajet vertical puis horizontal et, lors d'une terminaison de la décharge après la descente de l'élément agitateur tournant, la partie inférieure de l'orifice de décharge est fermée par remise en place, du tampon d'arrêt, et ensuite l'élément agitateur est remonté.

2. Un procédé tel que revendiqué dans la revendication 1, où le liquide est un métal fondu.

3. Un procédé tel que revendiqué dans la revendication 2, où ledit métal contient des particules solides primaires dendritiques dégénérées discrètes.

4. Une chambre mélangeuse pour mélanger et décharger un métal fondu, dans laquelle ledit métal (21) est agité par un élément mélangeur (11) disposé verticalement, comprenant, en combinaison, un orifice de décharge (37) disposé au centre du fond de ladite chambre mélangeuse (19), et une partie d'appui (25) placée à la base dudit élément mélangeur et adaptée pour s'emboîter dans la partie supérieure dudit orifice, la décharge et la terminaison de décharge du métal fondu pouvant être assurée par montée dudit élément mélangeur afin que du métal s'écoule par ledit orifice et, lorsqu'il est souhaité d'arrêter l'écoulement de métal, par descente dudit élément mélangeur tournant pour engager ladite partie d'appui dans la partie supérieure dudit orifice tout en maintenant sa rotation caractérisée par un tampon d'arrêt (35) adapté pour s'appuyer dans la partie de base de l'orifice de décharge (37), et par des moyens (39, 41, 43, 45) pour enlever le tampon d'arrêt de l'orifice de décharge sur un trajet vertical puis sur un trajet horizontal afin qu'une décharge de métal fondu soit effectuée en enlevant le tampon d'arrêt de l'orifice de décharge quand l'élément mélangeur se trouve dans la position haute, et lors de la terminaison de la décharge, après descente de l'élément mélangeur tournant, la partie de base dudit orifice est fermée par remise en place dudit tampon d'arrêt, et ensuite l'élément mélangeur peut être remonté.

5. Une chambre mélangeuse telle que revendiquée dans la revendication 4, dans laquelle la partie d'appui prévue au fond de ladite chambre mélangeuse est remplaçable.

0 062 398

*Fig. 2.*

*Fig. 1*

*Fig. 3*